Europäisches Patentamt

European Patent Office

Office européen des brevets

(19)

(11) Publication number: 0 368 096
A2

(12) EUROPEAN PATENT APPLICATION

(21) Application number: 89119975.4

(51) Int. Cl.5: B29C 47/32, F16L 11/118

(22) Date of filing: 27.10.89

(30) Priority: 07.11.88 CA 582445

(43) Date of publication of application:
16.05.90 Bulletin 90/20

(84) Designated Contracting States:
DE NL SE

(71) Applicant: Lupke, Manfred Arno Alfred
92 Elgin Street
Thornhill Ontario L3T 1W6(CA)

(72) Inventor: Lupke, Manfred Arno Alfred
92 Elgin Street
Thornhill Ontario L3T 1W6(CA)

(74) Representative: Patentanwälte Dipl.-Ing. W.
Dahlke Dipl.-Ing. H.-J. Lippert
Frankenforster Strasse 137
D-5060 Bergisch Gladbach 1(DE)

(54) Apparatus for producing tubing having interrupted helical ribs.

(57) `Helically ribbed pipe is provided with circum-
ferantial bands of interruptions which extend over the
full height of the rib are only partially over the height
of the ribs. The annular bands provided by these
interruptions form the base for annular sealing rings,
which have previously been difficult to locate on
helically ribbed pipe. Alternatively the interruptions,
when they extend over the full height of the rib may
make it possible to provide and end through the pipe
to result in a pipe end of annular section. Interrup-
tions may be slots in the helical rib or ribs of the
width such that a sealing ring fits snuggly into the
circumferential channel formed by the slots.

EP 0 368 096 A2

## BACKGROUND OF THE INVENTION

### FIELD OF THE INVENTION

The present invention relates to an apparatus for forming plastic pipe, having external helical ribs, a method of producing such plastic, and plastic pipe when produced by the apparatus or method of the invention.

In use, plastic pipe having an external helical rib has various advantages over annularly corrugated or annularly ribbed pipe. For example, when laying long length of annularly ribbed or corrugated pipe, it is quite difficult to adjust the position of such pipe in an axial direction. This is because the annular ribs provide good grip with the ground and there is considerable resistance to axial movement. The position of helically ribbed pipe may however, be adjusted in the axial direction by turning of the pipe about its axis. Turning in one direction will tend to promote movement in one axial direction and, turning of the pipe in the other direction will tend to produce movement in the other axial direction.

Helically ribbed pipe is often advantageous because it may be connected directly into screw threaded fittings, for example, screw threaded pipe connectors.

Moreover helically ribbed pipe has advantages in production over annularly ribbed pipe. In the production of annularly ribbed pipe pulsating pressures are set up in the extrusion head due to the corresponding pulsating demand for extrudate by the mold, the pulsations corresponding to increase demand at troughs in the mold for molding ribs of the pipe and decrease demand at crests between the troughs for molding pipe wall between the ribs. Such pulsations do not occur in molding helically ribbed pipe since a portion of a helical trough of the mold is always presented at the extrusion orifice thereby allowing operation at substantially constant pressure.

For this reason, the use of helically ribbed pipe is preferred for some applications. Such pipe, however, has some less desirable features, among which are difficulties in joining lengths of pipe together to annular connectors, and it is difficult to locate a sealing ring on the pipe with its plain normal to the pipe axis. Such sealing rings are frequently required for a variety of purposes including being part of connectors between pipe sections.

Moreover it is difficult to make a clean cross-sectional cut through spirally ribbed pipe normal to the axis and the end of the tube presented after such a cut is partly through a rib and partly through one of the grooves between ribs. Such an end is difficult to match in sealing relation with another such end.

It is clear that it would be desirable to provide plastic tubing which is spirally ribbed but which also has regions where a sealing ring may be located with its plane normal to the axis without interference from the helical rib. Such regions would also be desirable as cutting regions so that sections of pipe may be provided having end portions of annular cross-section with constant inner and outer radii. Thus, such end portions would be formed from short length of pipe having smooth walls.

Various extrusion apparatus for forming plastic pipe is known. For example, in U.S. Patent No. 3,981,663 issued of September 21, 1976 to Gerd P.H. Lupke discloses apparatus for forming corrugated pipe comprising a pair of complimentary upper and lower mold assembles each comprising an endless chain of articulately interconnected mold blocks. Mold blocks for each assembly cooperate to form a mold tunnel defining a tubular mold with a corrugated wall.

U.S. Patent No. 3,998,579 to Nordstrom discloses apparatus for forming ribbed plastic pipe in a mold tunnel formed by cooperating runs of mold blocks. US. Patent No. 4,504,206 issued March 12th, 1985 to Manfred A.A. Lupke et al discloses another apparatus for forming ribbed plastic pipe in a mold tunnel formed by cooperating runs of mold blocks. In this case, the mold block are not earned by chains but travel on tracks. U.S. Patent No. 4,712,993 issued December 15th, 1987 to Manfred A.A. Lupke discloses apparatus for forming ribbed plastic pipe in a traveling mold tunnel including an improved extrusion die. Pending Canadian Patent Application No. 577,653 filed on September 16th, 1988 relates to improvements in the actual mold blocks for corrugated plastic tubing.

### SUMMARY OF THE INVENTION

The present invention relates especially to improvements in apparatus generally of the traveling mold tunnel type which may be issued for the production of helically ribbed pipe by suitable choice of the mold face of the mold blocks forming the tunnel. The invention may be useful for example in apparatus as disclosed in aforemention U.S. Patents 3,998,579, 4,504,206, and 4,712,993 and in the apparatus of aforemention pending Canadian Patent Application No. 577,653. The invention may also be extended to apparatus of the same general type for the production of extruded plastic rod.

According to the invention there is provided apparatus for the production of helically ribbed plastic type or rod, said apparatus comprising a traveling mold tunnel formed of cooperating run mold blocks, faces of which define a tubular mold, said tubular mold including a helical recess for providing a corresponding helical rib on the resulting pipe or rod, in which the helical recess is interrupted by at least one reduced depth portion adapted to form a slot of reduced height in the resulting rib, reduced depth portion being located on at least one circumferential band of the mold.

Conveniently each pair of mold blocks forming a section of the mold tunnel includes a whole number of turns of the helical recess so that the face of each adjacent mold block may be identical. The invention also includes a method for the production of helically ribbed thermoplastic pipe or rod comprising extruding thermoplastic material into a traveling mold tunnel formed of cooperating runs of mold blocks, faces of which define a tubular mold, said tubular mold including at least one helical recess for providing a corresponding helical rib on resulting pipe or rod, * the or each helical recess being interrupted by at least one reduced depth portion being located on at least one circumferential band of the mold to form a pipe having at least one helical rib and at least one circumferential band defined by reduced height slots in the or each rib.

The invention also includes plastic pipe having a helical rib upstanding from its surface, the helical rib being interrupted by circumferential bands flush with the surface.

## BRIEF DESCRIPTION OF THE INVENTION

Embodiments of the invention will now be described by way of example with reference to the accompanying drawings in which:

Figure 1 is a section through part of an extrusion nozzle showing delivery of a parison to a mold tunnel;

Figure 2 is a perspective view of a mold block to form a mold tunnel for molding pipe or rod with an interrupted helical rib;

Figure 3 is a sketch of pipe having an interrupted helical rib;

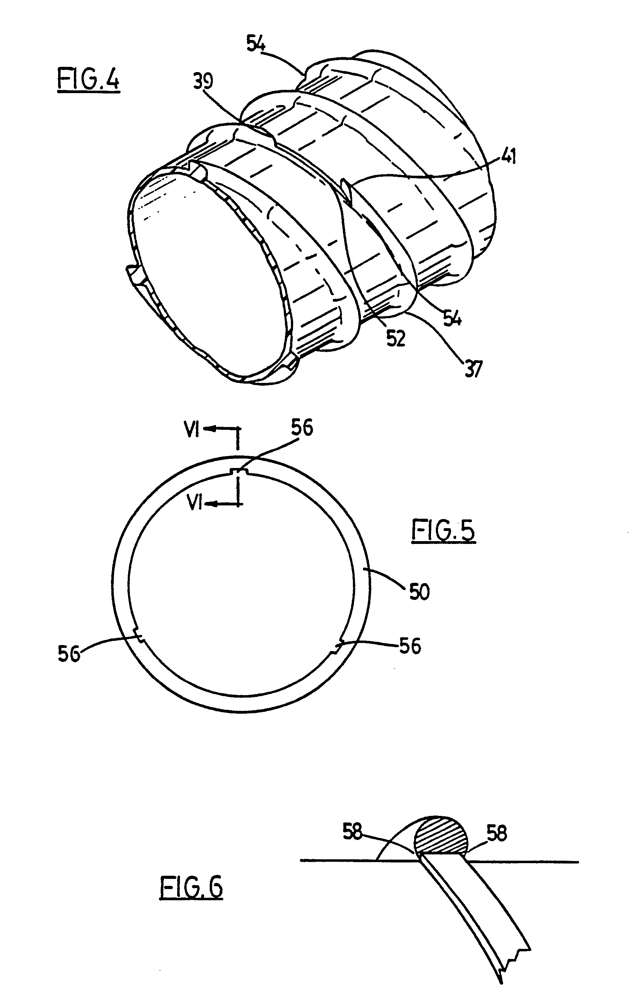

Figure 4 shows another embodiment of pipe having an interrupted helical rib;

Figure 5 is a planar section of a sealing ring for use with pipe as shown in Figure 4; and

Figure 6 is a section on the sealing ring of Figure 5 engaged by a rib.

## DETAILED DESCRIPTION OF THE PREFERRED

## EMBODIMENTS

In the drawings molding apparatus may comprise a pair of complimentary upper and lower mold assemblies 14 and 15 perspectively. Each mold assembly 14 and 15 comprises articulately inner connected mold blocks 16. The mold assemblies 14 and 15 may be upwardly positioned with respect to an extrusion head of extrusion apparatus.

The extrusion head may comprise an axially extending tubular portion 26 which is surrounded in spaced relation thereto by a tubular member 27, one portion of which screw threadedly supports an outer member 28 or an annular extrusion nozzle. The tubular portion 26 carries an inner member 29 of the extrusion nozzle having a frusto-conical surface 25. Between the inner member 29 and outer member 28 is an annular passage 30 of generally frusto-conical form which terminates in an annular orifice 31 for extrusion of a parison of plastics material.

Downstream of the extrusion nozzle, the extrusion head carries a generally cylindrical forming plug 46 having an outer surface 48. The plug 46 is effective to cause thermal plastic material leaving the extrusion nozzle at the annular orifice 31 to be molded by mold blocks 16. In particular, plug 46 forces thermal plastic material into a helical trough 36 of mold blocks 16 to form a helical rib 37 on the resulting pipe 38.

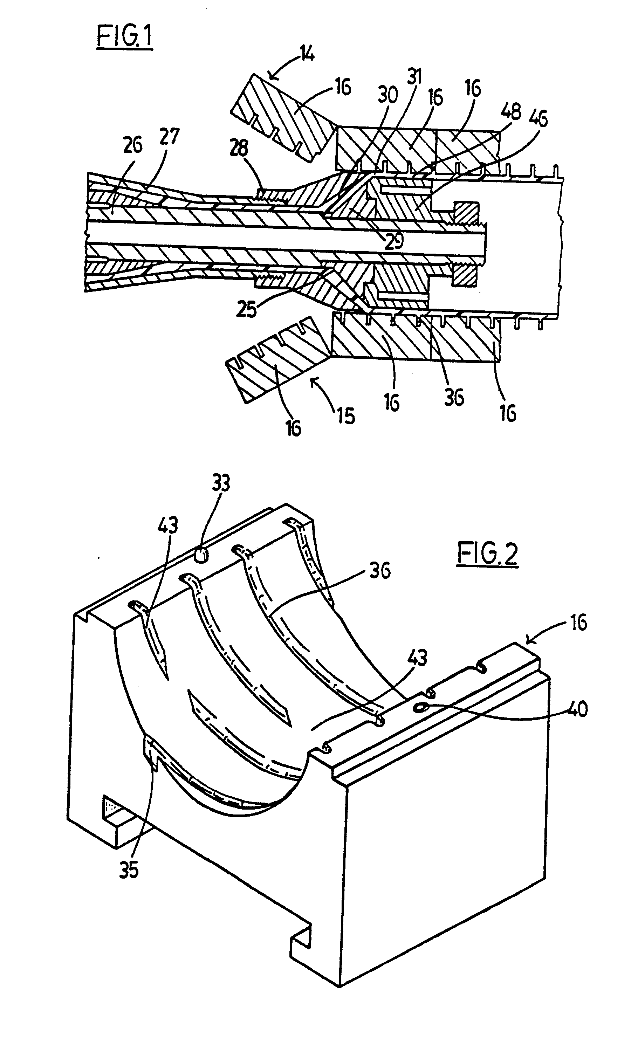

Each pair of corporating mold blocks 16 is provided with a helical groove 36 to define an abstract whole number of terms of the helical ribs 37, so that each succeeding mold block of each of the upper and lower runs is identical and interchangeable. As shown in the drawings 3 helical ribs of 37 are provide by 3 helical grooves 36 in mold blocks 16. Starts 35 for two of the grooves 36 are shown in figure 2, the third start being located on the corresponding mold block.

The mold blocks are conveniently provided with plugs 36 and corresponding sockets 40 to locate one with respect to a cooperating block. The mold block 16 may also be provided with cooling channels, as this conventional and means on their faces opposed to the mold face for engagement with a carrier track.

In order to provide pipe 38 with helical ribs 37 having interruptions 42 along its length, helical gooves 36 are provided with reduced depth portions 43 in positions corresponding to the annulus on the pipe from which the helical ribs are to be missing, i.e. rib ends 39 are located on one edge of annular bend 44 pipe and fresh rib starts 41 are located on the other edge 61 of the annular bend 44. The portions for the three maybe provided by inserting filing material into a groove 36 or a mold block 16 may be machined so that the helical grooves 36 are discontinuous at portions 43.

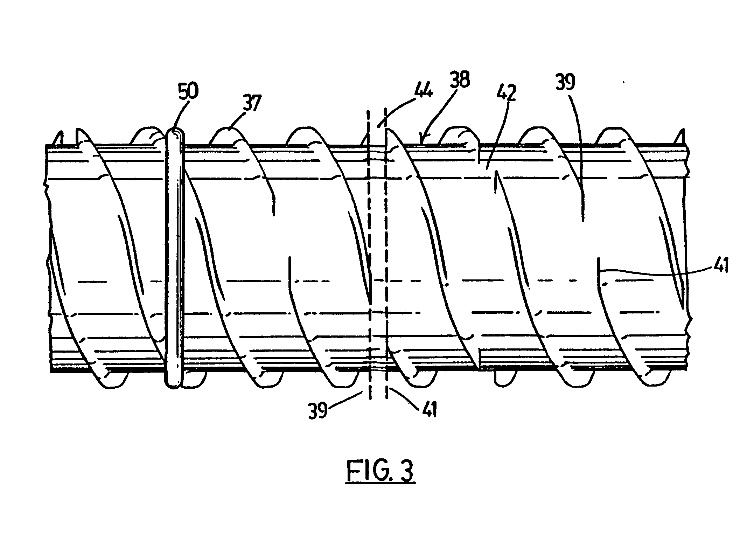

The circumferential band 44 (one of which is marked in Figure 3 by dotted lines) may be made of any convenient width by suitable machining or filling of a helical groove 36. These circumferential bands 44 are useful for the provision of sealing ring such as sealing ring 50 or they may be used as suitable locations for cutting pipe into lengths.

When a sealing ring 50 is seated on a circumferential band 44 of the pipe 38 the inner surface sealing ring may lie flush with the surface of the pipe and is not subject to lifting or interruption by the helical ribs 37 as would be the case if the helical ribs 37 were continuous. When it is desired to cut the pipe, it is desired that the cut end of the pipe be of annular cross-section so that it may be connected by either a screw threaded connector or by an annular connector of inner circular cross-section corresponding to that of the pipe which has to be joined. It is normally very difficult to provide fluid tight joining means for helically ribbed pipe using non-screw threaded connectors, without physically removing a section of the rib so that the pipe presents an unribbed end section for joining.

In a modification, each circumferential band 44 on the pipe need not have lower surfaces flush with the surface of the pipe 38. They may, in fact, be portion 52 of a helical rib 37 of lesser height of the main portion 54 of the rib. Such an upstanding band may be used with a sealing ring having a recess across its inner surface to correspond with each helical rib 37. In this case, the recesses of the sealing ring may lock the sealing ring against rotation on the pipe. Such a sealing ring shown in Figure 5 for engagement with a helically ribbed pipe having three starts. Thus, sealing ring 50 shown in Figure 5 has three equally spaced locking recesses 56 equally across its inner surface. These locking recesses are adapted to mate with ribbed portion 52 of reduced height.

A sealing ring 50 may be firmly located against displacement in the longitudinal direction by means of helically ribbed pipe in which the helix or helices are interrupted by circumferential band 44 flush with the surface of the pipe. The ends 39 of the rib 37 or ribs 37 at one edge of annular band 44 may restrain the sealing rings from longitudinal movement in one direction and the fresh starts 41 of the rib or ribs on the other edge of circumferential band 44 may restrain the sealing ring 50 from longitudinal movement in the other direction along the pipe.

When the circumferential band 44 is raised by ribbed portions 52, then the sealing ring may also be restrained from radial movement in both directions by each slot 54 formed by each reduced height ribbed portion 52.

For optimum sealing of the sealing ring 50 the recesses is 56 should be of such a width as to fit tightly about reduced height ribbed portion 52. Moreover, the depth of recess 56 should be substantially the same as the height of reduced height ribbed portions 52. Thus, the inner surface of sealing ring 50 should cling in sealing fashion around the main surface of pipe 38 and the surfaces of each recess 56 should similarly cling to the surfaces of the corresponding reduced height rib portion 52.

Normally the sealing ring 50 will be formed of resiliently deformable material. In this case, in the interests of good sealing its initial dimensions may be such that it is slightly stretched about pipe 38 and compressed into circumferential band 44 between rib ends 39 and fresh rib starts 41. When annular band 44 is raised by portions 52, the recesses 56 of the sealing rings should be dimensioned so that slight deformation is required to fit them into respective slots 54. This manner the sealing ring is biassed towards sealing with pipe 38.

## Claims

1. Apparatus for the production of helically ribbed plastic pipe or rod, said apparatus comprising a traveling mold tunnel formed of cooperating runs of mold blocks, faces of which define a tubular mold, said tubular mold including at least one helical recess for providing a corresponding helical rib on the resulting pipe or rod, in which:
the or each helical recess is interrupted by at least one reduced depth portion adapted to form a slot of reduced height in the resulting rib, reduced depth portions being located on at least one circumferential band of the mold.

2. Apparatus as claimed in claim 1 in which a pair of cooperating mold blocks forming a section of said mold tunnel include a whole number of turns of the or each helical recess.

3. Apparatus as claimed in claim 1 including an annular extrusion die, having an annular orifice whereby a plastic pipe is produced.

4. Apparatus as claimed in claim 3 including a cylindrical plug in the mold tunnel defining a channel between the mold tunnel and the plug.

5. Apparatus as claimed in claim 1, in which the depth of the or each reduced height portion is zero.

6. A method for the production of helically ribbed thermoplastic pipe or rod comprising extruding thermoplastic material into a traveling mold tunnel formed of cooperating runs of mold blocks, faces of which define a tubular mold, said tubular mold including at least one helical recess for providing a corresponding helical rib on resulting pipe or rod, the or each helical recess being interrupted by at least one reduced depth portion being located on at least one circumferential band of the mold tunnel; and thermoplastic material in conformity with the tubular mold to form pipe having at least one helical rib at least one circumferential band defined by reduced height slots in the or each rib.

7. Apparatus as claimed in claim 6 and in which a pair of cooperating mold blocks forming a section of said mold tunnel include a whole number of turns of the helical recess.

8. Apparatus as claimed in claim 6 including an annular extrusion die, whereby plastic pipe is produced.

9. Apparatus as claimed in claim 8 including a cylindrical plug and the mold tunnel defining a channel between.

10. Plastic pipe or rod having at least one helical rib upstanding the surface, the or each helical rib being interrupted by at least one circumferential band defined by reduced height slots in the or each rib.

11. Plastic pipe or rod as claimed in claim 10, in which a bottom surface of each reduced height slot is flush with the surface of the pipe.

12. Plastic pipe or rod as claimed in claim 10, in which a bottom surface of each reduced height slot is upstanding from the surface of the pipe.

13. Plastic pipe or rod as claimed in claim 11, a combination with the sealing ring having an inner surface and continuous sealing relationship with the surface of the pipe.

14. Plastic pipe or rod as claimed in claim 12, the reduced height slots of at least one circumferential band sealingly engaged corresponding recesses in an inner surface of a sealing ring, the inner surface of the sealing ring being generally in sealing relation with the surface of the pipe.

FIG.1

FIG.2

FIG.3

FIG.4

54

39

41

54

52

37

VI

56

VI

FIG.5

50

56

56

58

58

FIG.6